# EUROPEAN PATENT SPECIFICATION

(11) **EP 1 848 060 B1**
(45) Date of publication and mention of the grant of the patent: **30.11.2011**
(21) Application number: 07008135.1
(22) Date of filing: 20.04.2007
(51) Int. Cl.: H01Q 1/08, H01Q 1/10, H01Q 1/24

(54) **Portable terminal with antenna**
Tragbares Endgerät mit Antenne
Terminal portable avec antenne

(30) Priority: 21.04.2006 KR 20060036433
(43) Date of publication of application: 24.10.2007
(73) Proprietor: LG Electronics Inc., Seoul 150-721 (KR)
(72) Inventor: Kim, Mun-Gyu, Bucheon Gyeonggi-do (KR); Park, Jong-Hyan, Seoul (KR)
(74) Representative: Katérle, Axel

(56) References cited:
- EP-A- 0 954 054
- EP-A1- 0 764 998
- AT-B- 221 590
- AT-B- 253 003
- DE-A1- 1 441 725
- DE-A1- 3 343 329
- DE-U- 7 424 987
- FR-A1- 2 332 625
- GB-A- 619 703
- GB-A- 829 643
- GB-A- 896 147
- GB-A- 962 730
- GB-A- 1 114 628
- JP-A- 5 129 816
- JP-U- 5 031 317
- US-A- 5 479 178
- US-B1- 6 201 503
- US-B1- 6 208 301

## Description

### CROSS-REFERENCE TO RELATED APPLICATIONS

This application claims the benefit of earlier filing date and right of priority to Korean Application No. 10-2006-0036433, filed on April 21, 2006.

### FIELD OF THE INVENTION

The present invention relates to an antenna, and particularly, to a retractable antenna operatively connected to a terminal body and capable of being retractably housed into and withdrawn out of the terminal body.

### BACKGROUND OF THE INVENTION

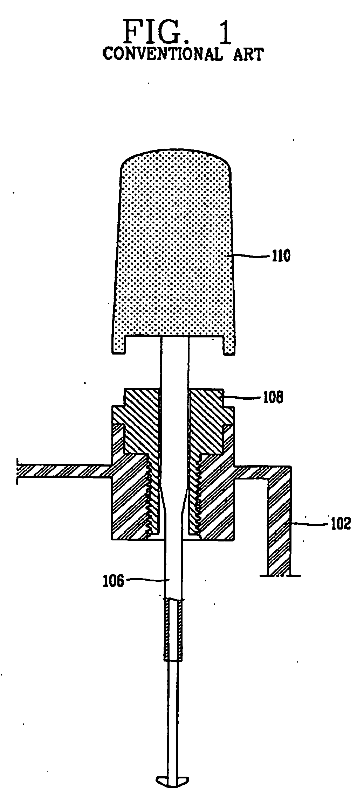

Figure 1 is a cross-sectional view showing an antenna of a portable terminal in accordance with the conventional art. The antenna of the portable terminal in accordance with the conventional art includes an antenna bushing (108) fixed to an upper end of a terminal body (102), an antenna rod (106) movably-arranged in the antenna bushing (108), wherein the antenna rod (106) is received in, and extendable in a longitudinal direction of, the terminal body (102), and an antenna head (110) formed at an end of the antenna rod (106). The antenna is extended above an upper end of the terminal body (102) so as to transceive radio frequencies when a user pulls upon the head (110) mounted at the end of the antenna rod (106).

However, the antenna in accordance with the conventional art is short in length. Thus, the antenna cannot satisfy a frequency bandwidth requirement for receiving a digital broadcast service. Further, because the antenna rod is extendable only in the longitudinal direction of the terminal body, when watching a satellite broadcast or a digital broadcast service while the terminal body is arranged in a landscape or horizontal orientation, the position of the antenna cannot be adjusted.

AT 253003 and AT 221590 describe telescope antennas with a pivot connection unit allowing an antenna rod of the antenna to pivot with respect to a base of the antenna. In both documents, the antenna at its top has a protruding knob.

DE 3 343 329 A1 describes an arrangement to avoid that a retractable antenna is inadvertedly removed from its guide by providing a base of an antenna with a protrusion which has to be moved in a guiding structure in a correct way to be able to remove the antenna.

JP 05-129816 refers to an antenna with a pivot connecting unit which is provided with an element angle setting means to set and hold the antenna at an prescribed angle.

US 5,479,178 describes an extendable and retractable antenna comprising a rod antenna and an helical antenna. The helical antenna is operated when the antenna is retracted. In this state, the helical antenna is disposed inside an antenna cap arranged on the outside of a housing of, e.g., a portable radio apparatus.

GB 619,703 discloses an antenna which can be pivoted and is provided with a mounting structure so that it can be installed into a car, when the car is properly prepared.

EP 0 954 054 A1 discloses an antenna comprising a folded antenna element and a rod-like antenna element in which the base side of the rod-like antenna element becomes inserted to the tip side of the folded antenna element. The antennas are arranged to achieve specific resonance frequencies.

### SUMMARY OF THE INVENTION

The present invention is directed to a retractable antenna operatively connected to a terminal body and capable of being retractably housed into and withdrawn out of the terminal body.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a portable terminal according to claim 1, comprising a terminal body, and a retractable antenna operatively connected to the terminal body and capable of being retractably housed into and withdrawn out of the terminal body, wherein the retractable antenna comprises a base rotatably supported at the terminal body, an antenna rod connected with the base and including at least one telescoping member for extending a length of the antenna rod, and a pivot connection unit connecting the base to the antenna rod and allowing the antenna rod to pivot with respect to the base.

In one aspect of the invention, the portable terminal further comprises a connection bushing mounted at the terminal body for guiding a linear motion of the retractable antenna and electrically connecting the antenna to the terminal body. Preferably, an outer circumferential surface of the base frictionally engages an inner circumferential surface of the connection bushing to support a rotated position of the antenna rod. Preferably, an elastic member is provided at the inner circumferential surface of the connection bushing to elastically contact the outer circumferential surface of the base. Preferably, the elastic member comprises one or more plate springs. Preferably, the outer circumferential surface of the base comprises a flared shape having a wider diameter towards a lower end thereof.

In another aspect of the invention, the portable terminal further comprises a multi-stop support formed between the base and the connection bushing for supporting a rotated position of the antenna rod. Preferably, the multi-stop support comprises at least one ball elastically supported at an inner circumferential surface of the connection bushing, and a plurality of detent recesses formed at an outer circumferential surface of the base at angular intervals for engagement by the at least one ball.

According to the invention, the portable terminal further comprises a head formed at an upper end of an uppermost telescoping member, wherein the head inserts into the terminal body when the retractable antenna is retractably housed into the terminal body. A knob is formed at the head, wherein the knob is capable of being pulled by a user to withdraw the retractable antenna from the terminal body. Preferably, a stopping jaw is formed at the head, wherein the stopping jaw prevents the retractable antenna from being ejected from the terminal body while the retractable antenna is housed within the terminal body. Preferably, a guide tube is formed in the terminal body and extending in a longitudinal direction thereof for linearly guiding the antenna into and out of the terminal body.

In another aspect of the invention, the pivot connection unit comprises a hinge member fixed to a lower end of the antenna rod and rotatably supported by a hinge shaft mounted at the base, and an elastic support installed in the base for elastically supporting the hinge member to maintain a rotated position of the antenna rod. Preferably, the elastic support comprises a linearly movable frictional member arranged within a space formed in the base and contacting a lower end of the hinge member, and an elastic member arranged within the space in the base and providing an elastic urging force to the frictional member. Preferably, the frictional member comprises a rubber material providing a frictional engaging force to the hinge member.

Preferably, the support comprises a ball mounted at a lower end of the antenna rod, and an elastic supporting member mounted in a recess formed in an upper end of the base for elastically supporting rotation of the ball in any direction. Preferably, the elastic supporting member comprises a rubber material including a spherical socket for holding the ball. Alternatively, the elastic supporting member comprises at least one plate spring fixed to the recess and contacting an outer circumferential surface of the ball.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Figure 1 is a cross-sectional view of a portable terminal antenna in accordance with the conventional art.

Figure 2 is a perspective view of a portable terminal implementing an antenna in accordance with a first embodiment of the present invention.

Figure 3 is a perspective view of a portable terminal in accordance with the first embodiment of the present invention arranged in a landscape or horizontal orientation.

Figure 4 is a cutaway perspective view illustrating an antenna being stowed in a terminal body in accordance with one embodiment of the present invention.

Figure 5 is a perspective view illustrating an antenna being extended from a terminal body in accordance with one embodiment of the present invention.

Figure 6 is a cross-sectional view of a pivot connection unit of an antenna in accordance with one embodiment of the present invention.

Figure 7 is a cross-sectional view of an antenna head in accordance with one embodiment of the present invention.

Figure 8 is a partial cross-sectional view of an antenna in accordance with a second embodiment of the present invention.

Figure 9 is a cross-sectional view of a pivot connection unit of an antenna in accordance with a third embodiment of the present invention.

Figure 10 is a cross-sectional view of a pivot connection unit of an antenna in accordance with a fourth embodiment of the present invention.

Figure 11 is a cross-sectional view of a pivot connection unit of an antenna in accordance with a fifth embodiment of the present invention.

Figure 12 is a cross-sectional view of a pivot connection unit of an antenna in accordance with a sixth embodiment of the present invention.

Figure 13 is a cross-sectional view of a pivot connection unit of an antenna in accordance with a seventh embodiment of the present invention.

### DETAILED DESCRIPTION OF THE PREFERRED EMBODIMENTS

The present invention is related to a retractable antenna operatively connected to a terminal body and capable of being retractably housed into and withdrawn out of the terminal body. Referring to the accompanying drawings, preferred embodiments of the antenna and of a portable terminal implementing the same in accordance with the present invention will now be described in detail.

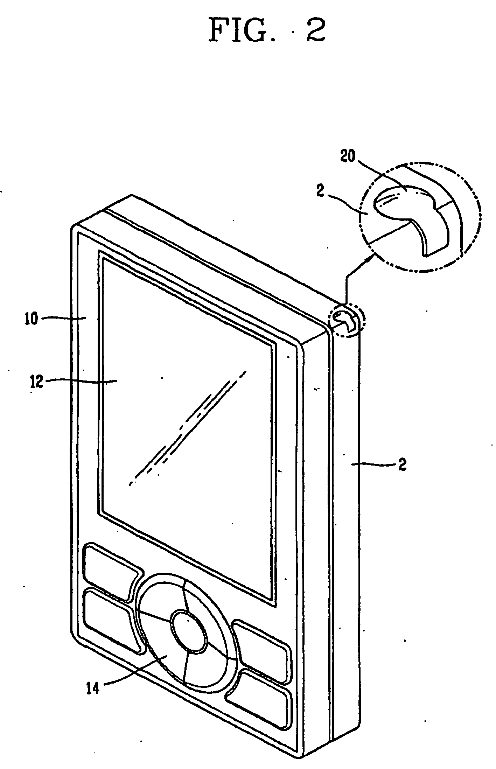

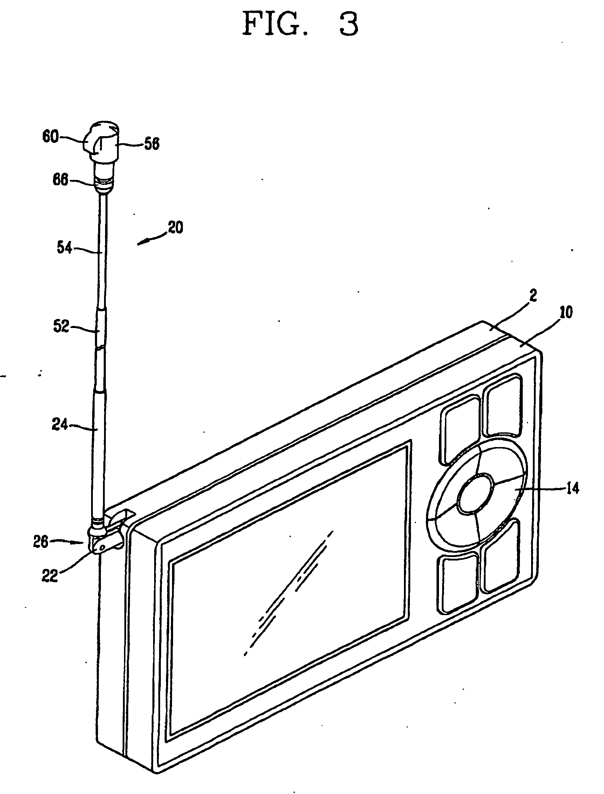

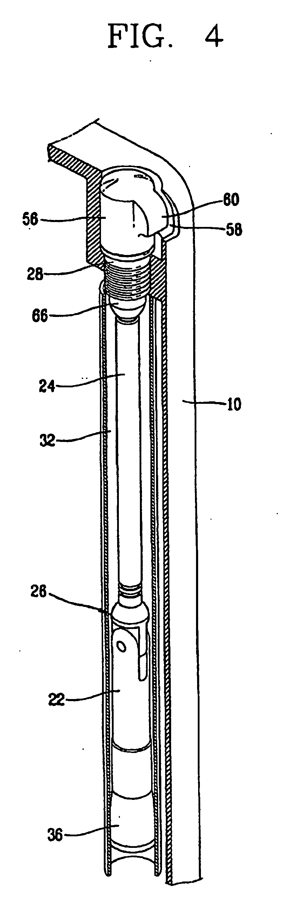

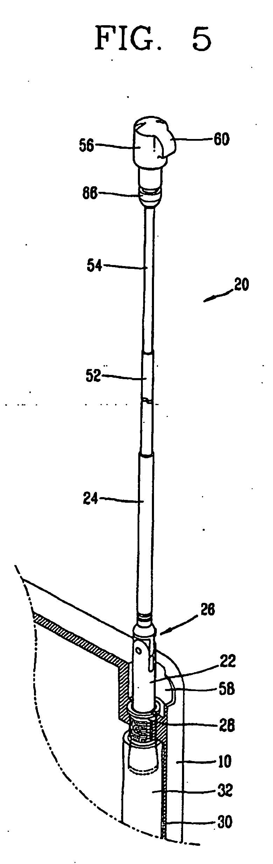

Figure 2 is a perspective view of a portable terminal implementing an antenna in accordance with a first embodiment of the present invention. Figure 3 is a perspective view of a portable terminal in accordance with the first embodiment of the present invention arranged in a landscape or horizontal orientation. Figure 4 is a perspective view illustrating an antenna retracted into a terminal body in accordance with one embodiment of the present invention. Figure 5 is a perspective view illustrating an antenna extended out from a terminal body in accordance with one embodiment of the present invention.

Referring to Figure 2, the portable terminal to which the antenna in accordance with the present invention is applied includes a display (12) for displaying information, a terminal body (10) to which a keypad (14) for inputting information is mounted, and an antenna (20) retractably mounted in the terminal body (10). Notably, the portable terminal may be any one of various portable terminal types, such as a folder type, a slide type and a swing type portable terminal, for example, as well as a bar type portable terminal as presented in the figures.

Referring to Figure 3, the antenna (20) includes a base (22) electrically connected to the terminal body (10), and an antenna rod (24) rotatably connected with the base (22) by a pivot connection unit (26). Referring to Figure 4, in the terminal body (10), a guide tube (32) is installed for preventing the antenna (20) from flexing at the pivot connection unit (26) when the antenna (20) is moved into the terminal body (10).

Preferably, the guide tube (32) is formed of a resin material with a hollow cylindrical shape and mounted in a longitudinal orientation of the terminal body (10). The guide tube (32) linearly guides the antenna when moved in the terminal body (10) so as to prevent the pivot connection unit (26) of the antenna (20) from flexing.

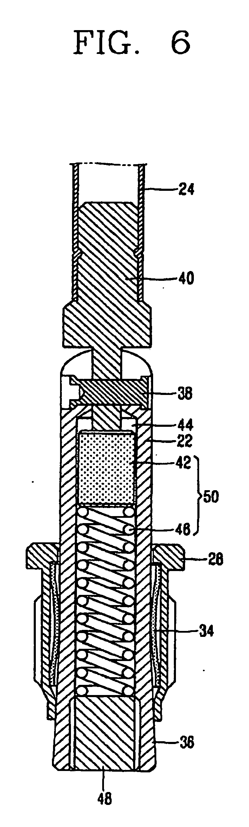

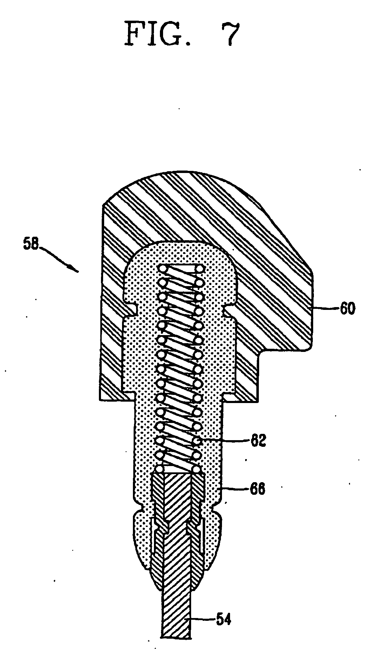

Figure 6 is a cross-sectional view of a pivot connection unit of an antenna in accordance with one embodiment of the present invention. Figure 7 is a cross-sectional view of an antenna head in accordance with one embodiment of the present invention.

Referring to Figures 4-6, at an upper end of the terminal body (10), the antenna (20) contacts a connection bushing (28) connected to a main printed circuit board mounted in the terminal body (10). Preferably, the connection bushing (28) is formed with a hollow cylindrical shape. At an outer circumferential surface of the connection bushing (28), a threaded portion is formed and coupled to the terminal body (10). At an inner circumferential surface of the connection bushing (28), an elastic member (34) is mounted for supporting a rotated position of the antenna (20), wherein the elastic member (34) is elastically frictional to an outer circumferential surface of a base (22) of the antenna (20). Preferably, the elastic member (34) is formed with a plurality of plate springs at regular intervals contacting the outer circumferential surface of the base (22) as it is installed at the inner circumferential surface of the bushing (28).

A frictional surface (36) is formed at one end of the antenna 20 on the base (22). Preferably, the frictional surface (36) frictionally contacts the inner circumferential surface of the connection bushing (28) in an axial direction for preventing the antenna (20) from being separated from the connection bushing (28). Furthermore, the frictional surface (36) supports an extended state and a rotated position of the antenna (20) in an axial direction.

Preferably, the frictional surface (36) has a flared shape having a wider diameter towards an end of the base (22) to maintain a certain frictional contact even when abraded by friction between the connection bushing (28) and the base (22) after an extended period of use. Specifically, because the frictional surface (36) of the base (22) has an inclined shape, even when abraded by friction with the inner circumferential surface the connection bushing (28), the region contacting the bushing (28) gradually moves lower along the frictional surface (36). Thus, frictional surface contact between the connection bushing (28) and the base (22) can be constantly maintained. Therefore, a supporting force on the antenna (20) can be constantly maintained for maintaining the extended and rotated position of the antenna (20) in the axial direction.

Referring to Figures 4-6, the pivot connection unit (26) includes a hinge pin (38) fixed through the base (22) in a direction transverse to a longitudinal axis of the base (22). The pivot connection unit (26) further includes a hinge member (40) rotatably supported by the hinge pin (38) and fixed to a lower end of the antenna rod (24), and an elastic support (50) arranged at the base (22) for elastically supporting the hinge member (24).

Preferably, the hinge member (40) comprises a cylindrical shape at an upper end thereof for being interposed to a lower end of the antenna rod (24). The hinge member (40) further comprises a flat shape at a lower portion thereof for being rotatably supported by the hinge pin (38). Additionally, the hinge member (40) comprises a semicircular shape at a lower end thereof for supporting the rotated positions of the antenna rod (24) by contacting the elastic support (50).

The elastic support (50) is linearly and movably arranged in a longitudinal bore (44) formed in the base (22), and includes a frictional bearing member (42) contacting the lower end of the hinge member (40) and an elastic member (46) providing an elastic urging force to the frictional bearing member (42). Preferably, the frictional bearing member (42) comprises a rubber material for frictionally engaging the lower end of the hinge member (40) to easily support the rotated position of the antenna rod (40). Preferably, the elastic member (46) comprises a coil spring compressed between a threaded plug (48) coupled to one end of the coil spring at the lower end of the base (22) and a lower surface of the frictional bearing member (42).

In accordance with the present invention, the pivot connection unit (26) enables a user to freely adjust a rotated angle of the antenna rod (24) because the hinge member (40) fixed at the antenna rod (24) is in frictional contact with the frictional bearing member (42). Also, even if the frictional bearing member (42) becomes abraded due to extended use, the frictional force between the frictional bearing member (42) and the hinge member (40) can be constantly maintained because the frictional bearing member (42) is supported by the elastic urging force of the elastic member (46).

Referring to Figure 5, the antenna rod (24) is formed of a tubular conductor having a hollow interior. Preferably, one or more telescoping inner members (52, 54) for extending the length of the antenna are mounted in the hollow interior of the tubular conductor.

An antenna head (56) is fixed at an upper end of an uppermost inner member (54). Referring to Figures 4 and 5, a head insertion opening (58) is recessed into an upper surface of the terminal body (10). Preferably, the antenna head (56) is inserted into the head insertion opening (58) so that the antenna (20) is completely received within the terminal body (10) without any protruded portion. Thus, the terminal body (10) is formed with a streamlined structure without any unsightly antenna components protruding from the terminal body (10). In addition, a knob (60) is formed at the antenna head (56). The knob (60) may be grasped by a user and pulled upon so as to extract the antenna (20) from the head insertion opening (58).

Preferably, a helical antenna connected to the inner member (54) is mounted in the antenna head (58). In addition, a stopping jaw (66) is formed at the antenna head (56) for preventing the antenna (20) from being ejected from the terminal body (10) while the antenna (20) is received within the terminal body (10).

Preferably, the stopping jaw (66) protrudes in a band shape in a circumferential direction at a lower portion of the antenna head (56). Thus, as the antenna (20) is received within the terminal body (10), the stopping jaw (66) is stopped by the inner circumferential surface of the bushing (28) for preventing the antenna (20) from being inadvertently withdrawn. Accordingly, because the stopping jaw (66) is formed at the antenna head (56), if a user pulls upon the knob (60) of the antenna head (56), the base (22) and the antenna rod (24) of the antenna (20) are extracted outside of the terminal body (10). The telescoping inner members (52, 54) mounted in the antenna rod (24) may be sequentially extended thereafter. Therefore, the antenna (20) may assume an overall length suitable for receiving a satellite broadcast or digital broadcast service.

An operation of the antenna in accordance with the present invention as configured above will now be described. In a received state, wherein the antenna is fully within the terminal (10), the antenna (20) is inserted into the guide tube (32) mounted in the terminal body (10) and the plurality of inner members (52, 54) are nested inside the antenna rod (24).

The antenna head (56) is inserted fully into the head insertion opening (58) formed in the upper surface of the terminal body (10) without any protruded portion. Moreover, the stopping jaw (66) formed at the antenna head (56) is stopped by the inner circumferential surface of the bushing (28) so as to prevent the antenna (20) from being freely ejected from the terminal body (10).

Preferably, when the antenna (20) is extended from the terminal body (10) to satisfy a DMB reception band frequency wavelength requirement, a user pulls upon the knob (60) formed at the antenna head (56). Thereafter, the stopping jaw (66) formed at the antenna head (56) is separated from the bushing (28) and freed. Accordingly, the base (22) and the antenna rod (24) of the antenna (20) are integrally extracted from the terminal body (10). That is, because the stopping jaw (66) is formed at the antenna head (58), once the stopping jaw (66) is unlocked, first the base (22) and the antenna rod (24) are extracted from the terminal body (10), and if the antenna head (56) is pulled further, then the plurality of telescoping inner members (52, 54) mounted in the antenna rod (24) are sequentially extracted.

Furthermore, the frictional surface (36) of the base (22) frictionally engages the inner circumferential surface of the bushing (28) to maintain the extended state of the antenna (20) and support the rotated location of the antenna (20) in the axial direction. As the antenna (20) is extended, the terminal body (10) may be arranged in a landscape or horizontal orientation. Accordingly, the antenna rod (24) may be rotated centering around the pivot connection unit (26) and arranged in a desired position. The pivot connection unit (26) supports the rotated position of the antenna rod (24) as the hinge member (40) fixed at the antenna rod (24) is elastically supported by the elastic support (50) arranged in the base (22).

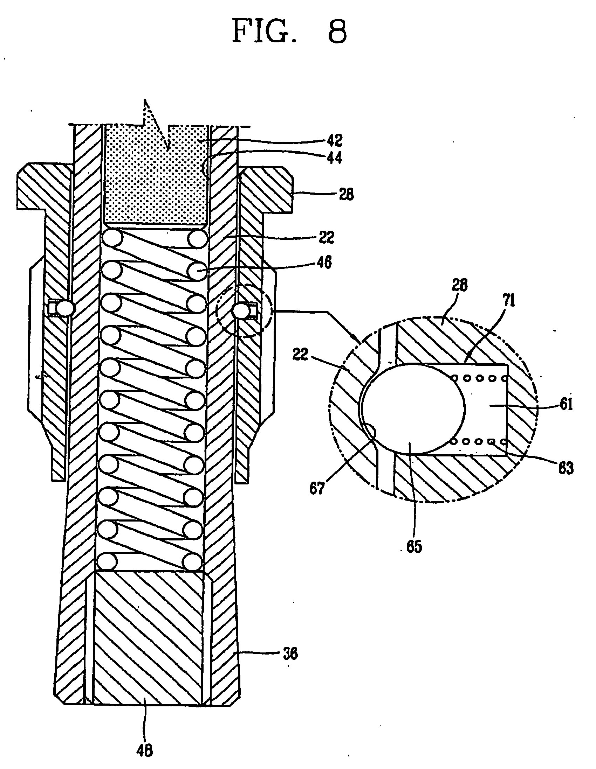

Figure 8 is a cross-sectional view of an antenna in accordance with a second embodiment of the present invention. The antenna in accordance with the second embodiment has the same configuration as the antenna described in the first embodiment, and additionally, has a configuration providing a multitude of rotated position stops when the antenna is rotated in the extended state.

Referring to Figure 8, in accordance with the second embodiment of the present invention, the antenna (20) comprises a multi-stop support (71) mounted between an inner surface of the bushing (28) and an outer surface of the base (22) for supporting multiple rotated positions of the antenna when the antenna is rotated. The multi-stop support (71) includes at least one recess (61) extending axially perpendicular in an inner circumferential surface of the bushing (28), a supporting ball (65) movable within the at least one recess (61), and a plurality of semispherical detents (67) formed at regular angular intervals in the outer circumferential surface of the base (22) into which the supporting ball (65) may be inserted. An elastic member (63) exerting an elastic urging force upon the supporting ball (65) is installed in the recess (61). Notably, any structure capable of supporting the rotated position of the antenna with multiple-stops as well as the structure described above can be applied for the multi-stop support (71).

In accordance with the second embodiment of the present invention, when the antenna is extended, the base (22) is located opposite to the inner surface of the bushing (28). Then, if the antenna is rotated, the supporting ball (65) elastically supported by the elastic member (63) is inserted into one of the plurality of detents (67) to support the rotated current position of the antenna.

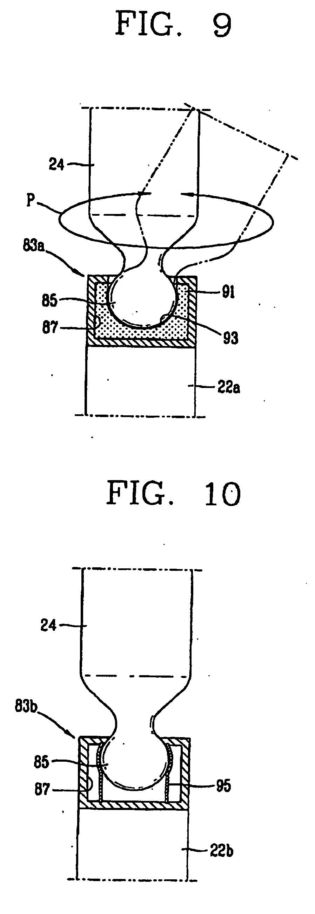

Figure 9 is a cross-sectional view of a pivot mechanism of an antenna in accordance with a third embodiment of the present invention. Referring to Figure 9, the antenna in accordance with the third embodiment is supported for axial rotation and has a supporting unit (83a) for maintaining the pivoted position of the antenna.

That is, the antenna in accordance with the third embodiment is pivotably supported by a supporting unit (83a) which maintains a rotated position of the antenna. Preferably, the antenna includes an antenna rod (24), a base (22a), and the supporting unit (83a) arranged between the antenna rod (24) and the base (22a).

Preferably, the antenna rod (24) has the same structure as that described in the first embodiment. The base (22a) is prevented from being abraded by friction of the bushing (28) since it is supported not to be rotated inside the bushing (28) into which the base (22a) is inserted.

The supporting unit (83a) includes a ball (85) mounted at a lower end of the antenna rod (24) and an elastic supporting member (91) mounted in a groove formed at an upper end of the base (22a) for elastically supporting the ball (85) to be freely rotated in any direction. Preferably, the elastic supporting member (91) comprises a conductive rubber or other elastomeric material having a semi-spherical socket opening (93) formed therein for holding the ball (85). Notably, any type of elastic supporting member having a suitable shape, such as a plate spring capable of rotatably and elastically supporting the ball (85), can be used as the elastic supporting member (91).

In accordance with the third embodiment of the present invention, after the antenna is withdrawn from the terminal body, the antenna's axis may be rotated in a direction shown by the arrow P. Accordingly, the antenna is rotatably supported at a ball end while the antenna is rotated. Because the ball (85) is elastically supported by the elastic supporting member (91), the antenna can maintain the rotated position. That is, when the antenna is rotated to adjust the angle of the antenna, the ball end, elastically supported by the elastic supporting member (91), maintains the rotated position of the antenna.

Figure 10 is a cross-sectional view of a pivot connection unit of an antenna in accordance with a fourth embodiment of the present invention. Referring to Figure 10, the antenna in accordance with the fourth embodiment is supported for axial rotation and has a supporting unit (83b) for maintaining the pivoted position of the antenna.
The supporting unit (83b) has the same structure as that described in the supporting unit (83a) of the third embodiment except that the elastic supporting member (95) is different from the elastic supporting member (91) of the third embodiment.
That is, the elastic supporting member (95) is formed to have a plate-spring type for elastically supporting the ball (85).

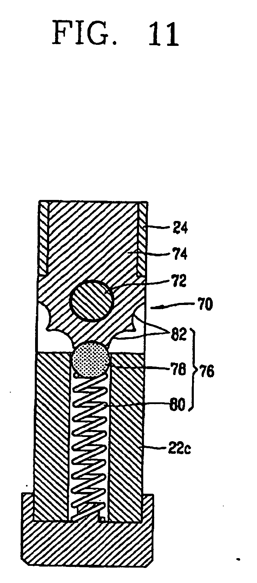

Figure 11 is a cross-sectional view of a pivot connection unit of an antenna in accordance with a fifth embodiment of the present invention. Referring to Figure 11, a pivot connection unit (70) enables pivoting of the antenna rod (24) with multiple stops. The pivot connection unit (70) includes a hinge member (74) fixed to a lower end of the antenna rod (24) and rotatable on a hinge pin (72) fixed to a base (22c), and a multi-stop support (76) installed between the hinge member (74) and the base (22c) supporting the hinge member (74) to be pivotable with multiple position stops.

The multi-stop support (76) includes a plurality of semicircular detent grooves (82) formed at regular angular intervals incised around a semicircular lower end surface of the hinge member (74), a supporting ball (78) elastically supported by the base (22) and insertable into the detent grooves (82), and an elastic member (80) providing an elastic urging force upon the ball (78) and arranged in the base (22c). The hinge member (74) is rotatable centering around the hinge pin (72) by the pivot connection unit (70). After a stopping angle is adjusted in the withdrawn state of the antenna rod (24), the ball (78) is stopped in one of the plurality of detent grooves (82) formed at the hinge member (74). Thus, the rotated position of the antenna rod (24) with the multiple position stops is supported.

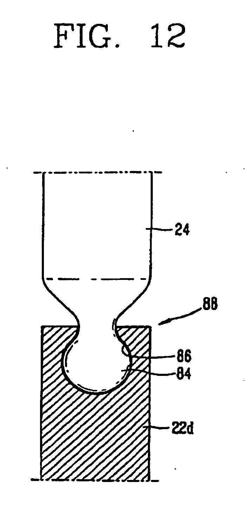

Figure 12 is a cross-sectional view of a pivot connection unit of an antenna in accordance with a sixth embodiment of the present invention. Referring to Figure 12, the pivot connection unit in accordance with the sixth embodiment comprises a ball-and-socket type hinge. Preferably, the pivot connection unit (88) includes a ball (84) connected to a lower end of the antenna rod (24), and a spherical socket unit (86) formed in an upper end of the base (22d). Preferably, the ball (84) is inserted into the socket unit (86) to rotatably support the ball (84).

In accordance with the present invention, the pivot connection unit (88) is rotatable when the ball (84), connected with the antenna rod (24), is inserted in the spherical groove unit (86) for supporting the rotated position of the antenna rod (24). Accordingly, the pivot connection unit (88) enables the antenna rod (24) to freely rotate in any direction.

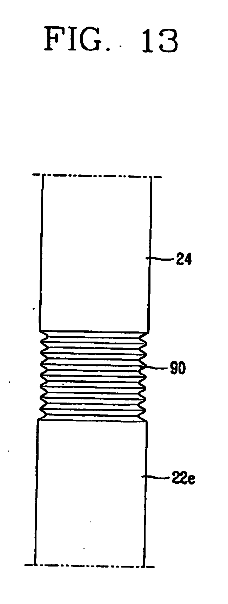

Figure 13 is a cross-sectional view of a pivot connection unit of an antenna in accordance with a seventh embodiment of the present invention. Referring to Figure 13, the pivot connection in accordance with the seventh embodiment comprises flexible connection bellows (90) connected between a lower end of the antenna rod (24) and an upper end of the base (22e). Preferably, the connection bellows (90) have a corrugated shape and flexibly supports the rotated position of the antenna rod (24).

In accordance with the present invention, a retractable antenna is mounted at the terminal body, and the base (22e) and the antenna rod (24) are connected with each other to be relatively rotatable by means of the pivot connection unit. Accordingly, the antenna rod (24) is freely rotated in any direction for convenient use.

Preferably, the antenna rod is rotatably connected by means of the pivot connection unit such that the rotated angle of the antenna rod can be freely adjusted. Further, a hinge member of the pivot connection unit is elastically supported by an elastic support such that loosening of a rotating portion of the antenna after frequent use may be prevented.

As the present invention may be embodied in several forms, it should also be understood that the above-described embodiments are not limited by any of the details of the foregoing description, unless otherwise specified, but rather should be construed broadly within its scope as defined in the appended claims.

## Claims

1. A portable terminal comprising:
a terminal body (10); and
a retractable antenna (20) operatively connected to the terminal body (10) and
capable of being retracted into and withdrawn out of the terminal body (10), wherein the retractable antenna (20) comprises:
a base (22) rotatably supported at the terminal body (10);
an antenna rod (24) connected with the base (22) and including at least one telescoping member (52, 54) for extending a length of the antenna rod (24);
a pivot connection unit (26, 70, 83a, 83b, 88) connecting the base (22) to the antenna rod (24) and allowing the antenna rod (24) to pivot with respect to the base (22);
an antenna head (56) formed at an upper end of an uppermost telescoping member (54), wherein the antenna head (56) inserts into the terminal body (10), and the upper surface of the antenna head (56) is externally exposed at an upper surface of the terminal body (10) when the retractable antenna (20) is retracted into the terminal body (10); and
a knob (60) formed at the antenna head (56), wherein the knob (60) is capable of being grasped and pulled by a user to withdraw the retractable antenna (20) from the terminal body (10), and the knob (60) is accommodated at a corner portion of the terminal body (10) when the retractable antenna (20) is retracted within the terminal body (10),
**characterized in that** the antenna head is formed in a cylindrical shape oriented with its axis along the antenna rod, the knob (60) protrudes from a side surface of the antenna head toward a side surface of the terminal body (10) neighboring with the upper surface of the terminal body (10), and the knob (60) is externally exposed at the side surface of the terminal body when the retractable antenna (20) is retracted within the terminal body (10).

2. The portable terminal of claim 1, further comprising a connection bushing (28) mounted at the terminal body (10) for guiding a linear motion of the retractable antenna (20) and electrically connecting the antenna (20) to the terminal body (10).

3. The portable terminal of claim 2, wherein an outer circumferential surface of the base (22) frictionally engages an inner circumferential surface of the connection bushing (28) to support a rotated position of the antenna rod (24).

4. The portable terminal of claim 3, wherein an elastic member (34) is provided at the inner circumferential surface of the connection bushing (28) to elastically contact the outer circumferential surface of the base (22).

5. The portable terminal of claim 4, wherein the elastic member (34) comprises one or more plate springs.

6. The portable terminal of claim 3, wherein the outer circumferential surface of the base (22) comprises a flared shape (36) having a wider diameter towards a lower end thereof.

7. The portable terminal of claim 2, further comprising a multi-stop support (71) formed between the base (22) and the connection bushing (28) for supporting a rotted position of the antenna rod (24).

8. The portable terminal of claim 7, wherein the multi-stop support (71) comprises:
at least one ball (65) elastically supported at an inner circumferential surface of the connection bushing (28); and
a plurality of detent recesses (67) formed at an outer circumferential surface of the base (22) at angular intervals for engagement by the at least one ball (65).

9. The portable terminal of claim 1, further comprising a stopping jaw (66) formed at the head (56), wherein the stopping jaw (66) prevents the retractable antenna (20) from being ejected from the terminal body (10) while the retractable antenna (20) is housed within the terminal body (10).

10. The portable terminal of claim 1, further comprising a guide tube (32) formed in the terminal body (10) and extending in a longitudinal direction thereof for linearly guiding the antenna (20) into and out of the terminal body (10).

11. The portable terminal of claim 1, wherein the pivot connection unit (26) comprises:
a hinge member (40) fixed to a lower end of the antenna rod (24) and rotatably supported by a hinge pin (38) mounted at the base (22); and
an elastic support (50) installed in the base (22) for elastically supporting the hinge member (40) to maintain a rotated position of the antenna rod (24).

12. The portable terminal of claim 11, wherein the elastic support (50) comprises:
a linearly movable frictional member (42) arranged within a space (44) formed in the base (22) and contacting a lower end of the hinge member (40); and
an elastic member (46) arranged within the space (44) in the base (22) and providing an elastic urging force to the frictional member (42).

13. The portable terminal of claim 12, wherein the frictional member (42) comprises a rubber material providing a frictional engaging force to the hinge member (40).

14. The portable terminal of claim 1, wherein the pivot connection unit (83a) comprises:
a ball (85) mounted at a lower end of the antenna rod (24); and
an elastic supporting member (91) mounted in a recess formed in an upper end of the base (22a) for elastically supporting rotation of the ball (85) in any direction.

15. The portable terminal of claim 14, wherein the elastic supporting member (91) comprises a rubber material including a spherical socket (93) for holding the ball (85).

## Patentansprüche

1. Tragbares Endgerät, umfassend:
- einen Endgerätekörper (10) und
- eine einziehbare Antenne (20), welche betriebsmäßig mit dem Endgerätekörper (10) verbunden ist und dazu geeignet ist, in den Endgerätekörper (10) eingezogen und aus diesem herausgezogen zu werden, wobei die einziehbare Antenne (20) umfasst:
- eine drehbar an dem Endgerätekörper (10) abgestützte Basis (20),
- einen mit der Basis (20) verbundenen Antennenstab (24) mit mindestens einem Teleskopelement (52, 54) zum Verlängern des Antennenstabs (24),
- eine die Basis (22) und den Antennenstab (24) verbindende Schwenkverbindungseinheit (26, 70, 83a, 83b, 88), welche eine Verschwenkung des Antennenstabs (24) gegenüber der Basis (22) gestattet,
- einen an einem oberen Ende eines obersten Teleskopelements (54) gebildeten Antennenkopf (56), wobei der Antennenkopf (56) in den Endgerätekörper (10) einführbar ist und die Oberseite des Antennenkopfs (56) an einer oberen Fläche des Endgerätekörpers (10) nach außen freiliegt, wenn die einziehbare Antenne (20) in den Endgerätekörper (10) eingezogen ist, und
- einen an dem Antennenkopf (56) gebildeten Knopf (60), wobei der Knopf (60) dazu geeignet ist, von einem Benutzer gegriffen und daran gezogen zu werden, um die einziehbare Antenne (20) aus dem Endgerätekörper (10) herauszuziehen, und wobei der Knopf (60) in einem Eckbereich des Endgerätekörpers (10) aufgenommen ist, wenn die einziehbare Antenne (20) in den Endgerätekörper (10) eingezogen ist,
**dadurch gekennzeichnet, dass** der Antennenkopf mit einer zylindrischen Form ausgeführt ist, deren Achse längs des Antennenstabs orientiert ist, wobei der Knopf (20) von einer Seitenfläche des Antennenkopfs zu einer seitlichen Fläche des Endgerätekörpers (10) hin absteht, welche benachbart zu der oberen Fläche des Endgerätekörpers (10) ist, und dass der Knopf (60) an der seitlichen Fläche des Endgerätekörpers nach außen freiliegt, wenn die einziehbare Antenne (20) in den Endgerätekörper (10) eingezogen ist.

2. Tragbares Endgerät nach Anspruch 1, ferner umfassend eine Verbindungsbuchse (28), welche an dem Endgerätekörper (10) angebracht ist, um eine lineare Bewegung der einziehbaren Antenne (20) zu führen und die Antenne (20) elektrisch mit dem Endgerätekörper (10) zu verbinden.

3. Tragbares Endgerät nach Anspruch 2, wobei eine Außenumfangsfläche der Basis (22) in Reibeingriff mit einer Innenumfangsfläche der Verbindungsbuchse (28) steht, um eine Drehstellung des Antennenstabs (24) zu stützen.

4. Tragbares Endgerät nach Anspruch 3, wobei an der Innenumfangsfläche der Verbindungsbuchse (28) ein elastisches Element (34) vorgesehen ist, um die Außenumfangsfläche der Basis (22) elastisch zu berühren.

5. Tragbares Endgerät nach Anspruch 4, wobei das elastische Element (34) eine oder mehrere Plattenfedern umfasst.

6. Tragbares Endgerät nach Anspruch 3, wobei die Außenumfangsfläche der Basis (22) eine sich aufweitende Form (36) mit einem größeren Durchmesser zu ihrem unteren Ende hin aufweist.

7. Tragbares Endgerät nach Anspruch 2, ferner umfassend eine mehrrastige Halterung (71), welche zwischen der Basis (22) und der Verbindungsbuchse (28) gebildet ist, um eine Drehstellung des Antennenstabs (24) zu stützen.

8. Tragbares Endgerät nach Anspruch 7, wobei die mehrrastige Halterung (71) umfasst:
- mindestens eine elastisch an einer Innenumfangsfläche der Verbindungsbuchse (28) abgestützte Kugel (65) und
- eine Mehrzahl an einer Außenumfangsfläche der Basis (22) in Winkelabständen gebildeter Rastausnehmungen (67) zum Eingriff durch die mindestens eine Kugel (65).

9. Tragbares Endgerät nach Anspruch 1, ferner umfassend eine an dem Kopf (56) gebildete Stoppklaue (66), wobei die Stoppklaue (66) verhindert, dass die einziehbare Antenne (20) aus dem Endgerätekörper (10) ausgestoßen wird, solange die einziehbare Antenne (20) in dem Endgerätekörper (10) aufgenommen ist.

10. Tragbares Endgerät nach Anspruch 1, ferner umfassend ein in dem Endgerätekörper (10) gebildetes Führungsrohr (32), welches sich in einer Längsrichtung desselben erstreckt, um die Antenne linear in und aus dem Endgerätekörper (10) zu führen.

11. Tragbares Endgerät nach Anspruch 1, wobei die Schwenkverbindungseinheit (26) umfasst:
- ein an einem unteren Ende des Antennenstabs (24) befestigtes Gelenkelement (40), welches durch einen an der Basis (22) angebrachten Gelenkstift (28) drehbar gelagert ist, und
- eine in die Basis (22) eingebaute elastische Halterung (50) zur elastischen Halterung des Gelenkelements (40), um eine Drehstellung des Antennenstabs (24) beizubehalten.

12. Tragbares Endgerät nach Anspruch 11, wobei die elastische Halterung (50) umfasst:
- ein linear bewegliches Reibelement (42), welches in einem in der Basis (22) gebildeten Raum (24) angeordnet ist und mit einem unteren Ende des Gelenkelements (40) in Berührung steht, und
- ein in dem Raum (44) in der Basis (22) angeordnetes elastisches Element (46), welches eine elastische Vorspannkraft auf das Reibelement (42) vorsieht.

13. Tragbares Endgerät nach Anspruch 12, wobei das Reibelement (42) ein Gummimaterial umfasst, welches eine Reibeingriffskraft auf das Gelenkelement (40) vorsieht.

14. Tragbares Endgerät nach Anspruch 1, wobei die Schwenkverbindungseinheit (83a) umfasst:
- eine an einem unteren Ende des Antennenstabs (24) angebrachte Kugel (85) und
- ein elastisches Stützelement (91), welches in einer an einem oberen Ende der Basis (22a) gebildeten Ausnehmung angebracht ist, um eine Drehung der Kugel (85) in beliebiger Richtung elastisch zu stützen.

15. Tragbares Endgerät nach Anspruch 14, wobei das elastische Stützelement (91) ein Gummimaterial umfasst, das eine Kugelfassung (93) enthält, um die Kugel (85) zu halten.

## Revendications

1. Terminal portable comprenant :
un corps de terminal (10) ; et
une antenne rétractable (20) connectée en fonctionnement au corps de terminal (10) et capable d'être rétractée dans le corps de terminal (10) et retirée de celui-ci, dans lequel l'antenne rétractable (20) comprend :
une base (22) supportée de manière rotative au niveau du corps de terminal (10) ;
un brin d'antenne (24) connecté à la base (22) et comprenant au moins un élément télescopique (52, 54) destiné à étendre une longueur du brin d'antenne (24) ;
une unité de connexion à pivot (26, 70, 83a, 83b, 88) connectant la base (22) au brin d'antenne (24) et permettant au brin d'antenne (24) de pivoter par rapport à la base (22) ;
une tête d'antenne (56) formée au niveau d'une extrémité supérieure de l'élément télescopique le plus haut (54), dans lequel la tête d'antenne (56) s'insère dans le corps de terminal (10), et la surface supérieure de la tête d'antenne (56) est exposée de manière externe au niveau d'une surface supérieure du corps du terminal (10) lorsque l'antenne rétractable (20) est rétractée dans le corps de terminal (10) ; et
un bouton (60) formé au niveau de la tête d'antenne (56), dans lequel le bouton (60) est capable d'être saisi et tiré par un utilisateur pour retirer l'antenne rétractable (20) du corps du terminal (10), et le bouton (60) est logé au niveau d'une partie de coin du corps de terminal (10) lorsque l'antenne rétractable (20) est rétractée à l'intérieur du corps de terminal (10),
**caractérisé en ce que** la tête d'antenne est formée selon une forme cylindrique orientée avec son axe le long du brin d'antenne, le bouton (60) fait saillie depuis une surface latérale de la tête d'antenne vers une surface latérale du corps de terminal (10) avoisinant la surface supérieure du corps de terminal (10), et le bouton (60) est exposé de manière externe au niveau de la surface latérale du corps de terminal lorsque l'antenne rétractable (20) est rétractée à l'intérieur du corps de terminal (10).

2. Terminal portable selon la revendication 1, comprenant en outre une douille de connexion (28) montée au niveau du corps de terminal (10) pour guider un mouvement linéaire de l'antenne rétractable (20) et connecter électriquement l'antenne (20) au corps de terminal (10).

3. Terminal portable selon la revendication 2, dans lequel une surface circonférentielle externe de la base (22) s'engage par frottement avec une surface circonférentielle interne de la douille de connexion (28) pour supporter une position de rotation du brin d'antenne (24).

4. Terminal portable selon la revendication 3, dans lequel un élément élastique (34) est prévu au niveau de la surface circonférentielle interne de la douille de connexion (28) pour contacter élastiquement la surface circonférentielle externe de la base (22).

5. Terminal portable selon la revendication 4, dans lequel l'élément élastique (34) comprend un ou plusieurs ressorts à lames.

6. Terminal portable selon la revendication 3, dans lequel la surface circonférentielle externe de la base (22) comprend une forme évasée (36) présentant un diamètre plus large vers l'extrémité inférieure de celle-ci.

7. Terminal portable selon la revendication 2, comprenant en outre un support à butées multiples (71) formé entre la base (22) et la douille de connexion (28) pour supporter une position de rotation du brin d'antenne (24).

8. Terminal portable selon la revendication 7, dans lequel le support à butées multiples (71) comprend :
au moins une bille (65) supportée élastiquement au niveau d'une surface circonférentielle interne de la douille de connexion (28) ; et
une pluralité de renfoncements de cliquet (67) formés au niveau d'une surface circonférentielle externe de la base (22) à des intervalles angulaires pour engagement par la au moins une bille (65).

9. Terminal portable selon la revendication 1, comprenant en outre une mâchoire d'arrêt (66) formée au niveau de la tête (56), dans lequel la mâchoire d'arrêt (66) empêche l'antenne rétractable (20) d'être éjectée du corps de terminal (10) alors que l'antenne rétractable (20) est logée à l'intérieur du corps de terminal (10).

10. Terminal portable selon la revendication 1, comprenant en outre un tube de guidage (32) formé dans le corps de terminal (10) et s'étendant dans une direction longitudinale de celui-ci pour guider linéairement l'antenne (20) dans le corps de terminal (10) et hors de celui-ci.

11. Terminal portable selon la revendication 1, dans lequel l'unité de connexion à pivot (26) comprend :
un élément de charnière (40) fixé sur une extrémité inférieure du brin d'antenne (24) et supporté en rotation par un axe de charnière (38) monté au niveau de la base (22) ; et
un support élastique (50) installé dans la base (22) destiné à supporter élastiquement l'élément de charnière (40) pour maintenir une position de rotation du brin d'antenne (24).

12. Terminal portable selon la revendication 11, dans lequel le support élastique (50) comprend :
un élément de frottement linéairement mobile (42) disposé à l'intérieur d'un espace (44) formé dans la base (22) et contactant une extrémité inférieure de l'élément de charnière (40) ; et
un élément élastique (46) disposé à l'intérieur de l'espace (44) dans la base (22) et procurant une force de sollicitation élastique à l'élément de frottement (42).

13. Terminal portable selon la revendication 12, dans lequel l'élément de frottement (42) comprend un matériau en caoutchouc procurant une force d'engagement par frottement à l'élément de charnière (40).

14. Terminal portable selon la revendication 1, dans lequel l'unité de connexion à pivot (83a) comprend :
une bille (85) montée au niveau d'une extrémité inférieure du brin d'antenne (24) ; et
un élément de support élastique (91) monté dans un renfoncement formé dans une extrémité supérieure de la base (22a) destiné à supporter élastiquement la rotation de la bille (85) dans n'importe quelle direction.

15. Terminal portable selon la revendication 14, dans lequel l'élément de support élastique (91) comprend un matériau en caoutchouc incluant une alvéole sphérique (93) destinée à maintenir la bille (85).
